(19) **Europäisches Patentamt / European Patent Office / Office européen des brevets**

(11) **EP 1 440 984 B1**

(12) **EUROPEAN PATENT SPECIFICATION**

(45) Date of publication and mention
of the grant of the patent:
**17.10.2007 Bulletin 2007/42**

(51) Int Cl.:
**C08F 2/10** (2006.01)

(21) Application number: **04001592.7**

(22) Date of filing: **26.01.2004**

(54) **Method of manufacturing water-absorbing shaped body**

Verfahren zur Herstellung von einem wasserabsorbierenden Formkörper

Méthode de fabrication d'un corps moulé hydroabsorbant

(84) Designated Contracting States:
**AT BE BG CH CY CZ DE DK EE ES FI FR GB GR HU IE IT LI LU MC NL PT RO SE SI SK TR**

(30) Priority: **27.01.2003 JP 2003017125**

(43) Date of publication of application:
**28.07.2004 Bulletin 2004/31**

(73) Proprietor: **NIPPON SHOKUBAI CO., LTD.**
**Osaka-shi, Osaka 541-0043 (JP)**

(72) Inventors:
• **Dairoku, Yorimichi,**
**c/o Nippon Shokubai Co., Ltd.**
**Himeji-shi**
**Hyogo 671-1292 (JP)**

• **Irie, Yoshio,**
**c/o Nippon Shokubai Co., Ltd.**
**Himeji-shi**
**Hyogo 671-1292 (JP)**
• **Fujino, Shinichi,**
**c/o Nippon Shokubai Co., Ltd.**
**Himeji-shi**
**Hyogo 671-1292 (JP)**

(74) Representative: **TBK-Patent**
**Bavariaring 4-6**
**80336 München (DE)**

(56) References cited:
**EP-A- 0 228 638**

**Description**

FIELD OF THE INVENTION

The present invention relates to a manufacturing method for manufacturing a water-absorbing shaped body by polymerizing a water-soluble ethylenically unsaturated monomer. More specifically, the present invention relates to a method of manufacturing a water-absorbing shaped body, in which polymerization is caused by using a photo polymerization initiator.

BACKGROUND OF THE INVENTION

Conventionally, water-absorbing resin is widely used as a material for paper diapers, sanitary napkins, so-called incontinence pads, and other sanitary products. The water-absorbing resin is a hydrophilic resin used in order to absorb body fluids. Well-known examples of the water-absorbing resin are (i) cross-linked partially neutralized polyacrylic acid, (ii) a hydrolyzed starch-acrylonitrile graft polymer, (iii) a neutralized starch-acrylic graft polymer, (iv) a saponified vinyl acetate- acrylic ester copolymer, (v) a hydrolyzed acrylonitrile copolymer or a hydrolyzed acrylamide copolymer, (vi) a cross-linked body of one of (ii) to (v), (vii) a cross-linked cationic monomer, (viii) and the like.

A well-known example of a method of manufacturing water-absorbing resin from a water-soluble ethylenically unsaturated monomer is a reversed phase suspension polymerization method. In this method, in order to cause polymerization, a water-soluble ethylenically unsaturated monomer or an aqueous solution thereof is suspended and dispersed in a hydrophobic organic solvent.

Examples of methods of producing a water-absorbing shaped body that is a shaped body of the water-absorbing resin are disclosed in the following patent publications 1 to 6. In these methods, a polymer is obtained by adding a thickening agent to a monomer solution so as to attain a predetermined viscosity, and radiating light.

(Patent Publication 1) Japanese Publication for Patent No. 3009574 (publication date: December 3, 1999)

(Patent Publication 2) Japanese Publication for Unexamined Patent Application, *Tokukaihei* No. 9-51912 (publication date: February 25, 1997)

(Patent Publication 3) Japanese Publication for Unexamined Patent Application, *Tokukaihei* No. 10-5583 (publication date: January 1, 1998)

(Patent Publication 4) Japanese Publication for Unexamined Patent Application, *Tokukaihei* No. 10-18125 (publication date: January 20, 1998)

(Patent Publication 5) Japanese Publication for Unexamined Patent Application, *Tokukaisho* No. 62-156102 (publication date: July 11, 1987) (corresponding to United States Patent No. 4,857,610 and United States Patent No. 4,893,999)

(Patent Publication 6) United States Patent No. 6022610 (date of patent: February 8, 2000)

However, in the methods of the patent publications 1 to 6, the thickening agent is added in advance to the monomer solution, so as to shape the monomer solution into a predetermined shape. The thickening agent cannot be handled easily, due to its high viscosity. Therefore, it requires a lot of labor to mix the thickening agent in the monomer solution. Moreover, some thickening agents deteriorate performance of the water-absorbing shaped body produced.

SUMMARY OF THE INVENTION

The present invention was made to solve the foregoing conventional problems. An object of the present invention is to provide a method of manufacturing a water-absorbing shaped body, in which no thickening agent is added, so that the water-absorbing shaped body is manufactured more easily.

To solve the problems above, a method of the present invention for manufacturing a water-absorbing shaped body includes the step of: polymerizing an aqueous solution including a photo polymerization initiator and a water-soluble ethylenically unsaturated monomer by radiating light intermittently onto the aqueous solution.

To solve the problems above, a method of the present invention for manufacturing a water-absorbing shaped body is a method in which an aqueous solution including a photo polymerization initiator and a water-soluble ethylenically unsaturated monomer is polymerized, the method including the steps of: radiating light onto the aqueous solution, so as to polymerize a part of the water-soluble ethylenically unsaturated monomer (a first polymerization step); stopping radiation of the light, and shaping the aqueous solution, which includes a polymer as a part thereof (a shaping step); and radiating light onto the aqueous solution, which has been shaped and which includes the polymer as a part thereof, so that a rest of the water-soluble ethylenically unsaturated monomer is polymerized (a second polymerization step).

In the foregoing arrangements, light is radiated intermittently onto an aqueous solution including a photo polymerization initiator and a water-soluble ethylenically unsaturated monomer. In this way, the aqueous solution is partially polymerized by the light radiated intermittently, so that the viscosity of the aqueous solution is increased until viscosity required for shaping is attained. This makes it possible to perform shaping easily without using a thickening agent.

Thereafter, light is radiated again so as to complete the polymerization. Thus, it is possible to easily manufacture a water-absorbing shaped body having a desired shape.

Moreover, if a photo polymerization initiator is used in order to polymerize the aqueous solution, polymerization can be controlled more easily by controlling radiation of the light, as compared with a case in which a monomer is polymerized by using a thermal polymerization initiator or a redox-type polymerization initiator.

For a fuller understanding of the nature and advantage of the invention, reference should be made to the ensuring detailed description taken in conjunction with the accompanying drawings.

DESCRIPTION OF THE EMBODIMENTS

The following more specifically describes the present invention.

A method of the present embodiment for manufacturing a water-absorbing shaped body is a method in which an aqueous solution including a photo polymerization initiator and a water-soluble ethylenically unsaturated monomer is polymerized by radiating light intermittently onto the aqueous solution. (Water-soluble Ethylene Unsaturated Monomer)

Specific examples of the water-soluble ethylenically unsaturated monomer constituting the water-absorbing shaped body are (i) an anionic unsaturated monomer such as acrylic acid, methacrylic acid, crotonic acid, maleic acid (anhydride), fumaric acid, itaconic acid, vinylsulfonic acid, styrenesulfonic acid, 2-(meth)acrylamide-2-methylpropanesulfonic acid, 2-(meth)acryloylethanesulfonic acid, 2-(meth)acryloylpropanesulfonic acid, and the like, and salt of the anionic unsaturated monomer; (ii) a nonionic hydrophilic-group-containing unsaturated monomer such as acrylamide, methacrylamide, N-ethyl(meth)acrylamide, N-n-propyl(meth)acrylamide, N-isopropyl(meth)acrylamide, N,N-dimethyl(meth)acrylamide, 2-hydroxyethyl(meth)acrylate, 2-hydroxypropyl(meth)acrylate, methoxypolyethyleneglycol(meth)acrylate, polyethyleneglycolmono(meth)acrylate, vinylpyridine, N-vinylpyrrolidone, N-acryloylpiperidine, N-acryloylpyrrolidine, and the like; (iii) a cationic unsaturated monomer such as N,N-dimethylaminoethyl(meth)acrylate, N,N-diethylaminoethyl (meth)acrylate, N,N-dimethylaminopropyl(meth)acrylate, N,N-dimethylaminopropyl(meth)acrylamide, and quaternary salt thereof; (iv) and the like. The monomer may be used alone, or may be used in combination of more than one kind, according to needs. In light of performance and costs, it is more preferable to use acrylic acid and/or salt thereof (hereinafter "acrylic acid (salt)"), among the examples of the water-soluble ethylenically unsaturated monomer. Yet more preferably, acrylic acid (salt) is used as a main component that makes up 50 mol% or more of the water-soluble ethylenically unsaturated monomer. Further preferably, the acrylic acid (salt) makes up 80 mol% or more of the water-soluble ethylenically unsaturated monomer. It is particularly preferable if the acrylic acid (salt) makes up 95 mol% or more of the water-soluble ethylenically unsaturated monomer.

If (i) acrylic acid (salt) and (ii) a monomer other than acrylic acid (salt) are used in the present invention, the monomer other than acrylic acid (salt) makes up preferably 30% or less, and more preferably 10% or less, of a sum of (i) the acrylic acid and salt thereof and (ii) the monomer other than acrylic acid (salt). By using (ii) the monomer other than acrylic acid (salt) in the foregoing ratio, a water-absorbing property of the waster-absorbing resin obtained is further improved, and the waster-absorbing resin can be produced at lower costs.

(Photo Polymerization Initiator)

In the present embodiment, the water-soluble ethylenically unsaturated monomer is polymerized by using a photo polymerization initiator. The photo polymerization initiator is, for example, acetophenone, benzoin, benzophenone, benzyl, and a derivative thereof. Specific examples of the derivative and other photo polymerization initiators are (i) an acetophenone derivative such as diethoxyacetophenone, 2-hydroxy-2-methyl-1-phenylpropane-1-one, benzyldimethylketal, 4-(2-hydroxyethoxy)phenyl-(2-hydroxy-2-propyl)ketone, 1-hydroxycyclohexyl-phenylketone, 2-methyl-2-morpholino(4-thiomethylphenyl)propane-1-one, 2-benzyl-2-dimethylamino-1-(4-morpholinophenyl)-butanone, and the like; (ii) benzoinalkylethers such as benzoinmethylether, benzoinethylether, benzoinisopropylether, benzoinisobutylether, and the like; (iii) a benzophenone derivative such as o-benzoyl methyl benzoate, 4-phenylbenzophenone, 4-benzoyl-4'-methyl-diphenylsulfide, 3,3',4,4'-tetra(t-butylper-oxylcarbonyl)benzophenone, 2,4,6-trimethylbenzophenone, 4-benzoyl-N,N-dimethyl-N-[2-(1-oxo-2-propenyloxy)ethyl]benzeneammoniumchloride, (4-benzoylbenzyl)trimethylammoniumchloride, and the like; (iv) a thioxanthene-type compound; (v) an acylphosphineoxide derivative such as bis(2,4,6-trimethylbenzoyl)-phenylphosphineoxide, bis(2,6-dimethoxybenzoyl)2,4,4-trimethyl-pentylphosphineoxide, 2,4,6-trimethylbenzoyldiphenylphosphineoxide, 2,4,6-trimethylbenzoylphenylethoxyphosphineoxide, and the like; (vi) an azoic compound such as 2,2'-azobis(2-amidinopropane)dihydrochloride, 2,2'-azobis(N,N'-dimethyleneisobutylamidine and salt thereof, 2,2'-azobis(2-methylpropionamidine) and salt thereof, 2,2'-azobis(2-methylpropionitryl), 4,4'-azobis(4-cyanovaleric acid) and salt thereof, 2,2'-azobis[2-hydroxymethyl(propionitryl)], 2,2'-azobis{2-methyl N-[1,1'-bis(hydroxymethyl)-2-hydroxyethyl]propionamide}, 2,2'-azobis{2-methyl-N-[1,1'-bis(hydroxymethyl)ethylpropionamide]} 2,2'-azobis[2-methyl-N-(2-hydroxyethyl)propionamide], 2,2'-azobis(2-methylpropionamide), and the like; (vii) and the like. Note that the azoic compound can also function as a thermal radical initiator. The photo polymerization initiator may be used alone, or may be used in combination of more than one kind. In light of costs and reactivity, it is more preferable to use an acetophenone derivative, an acylphosphineoxide derivative, and/or an azoic compound, among the examples of the photo polymerization initiator.

The photo polymerization initiator is used in an amount sufficient for initiating a polymerization reaction. The amount of the photo polymerization initiator used depends on intensity of the light used, but is preferably within a range of 0.001% by mass to 5% by mass, and more preferably within a range of 0.01% by mass to 3% by mass, with respect to the water-soluble ethylenically unsaturated monomer. If the amount of the photo polymerization initiator used is less than 0.001% by mass, there is a possibility that no polymerization reaction is initiated. On the other hand, using more than 5% by mass of the photo polymerization initiator is economically disadvantageous.

(Concentration of Monomer)

In view of performance and easy controllability of polymerization, it is preferable that the water-soluble ethylenically unsaturated monomer is polymerized in a form of an aqueous solution. In this case, a concentration of the water-soluble ethylenically unsaturated monomer in the aqueous solution is preferably within a range of 10% by mass to 95% by mass, and more preferably within a range of 20% by mass to 60% by mass, with respect to a total amount of the aqueous solution. Moreover, in addition to water, a solvent other than water may be used concurrently, according to needs. The solvent used concurrently is not limited to a particular kind.

(Cross-linking Agent)

In the present embodiment, the water-soluble ethylenically unsaturated monomer is polymerized by using a photo polymerization initiator. However, in polymerize the water-soluble ethylenically unsaturated monomer, a cross-linking agent may be used according to needs. By adding a cross-linking agent, it is possible to further improve a degree of polymerization (degree of cross-linkage) of the water-absorbing shaped body obtained.

Examples of the cross-linking agent are N,N' -methylenebis(meth)acrylamide, (poly)ethyleneglycoldi(meth) acrylate, (poly)propyleneglycoldi(meth)acrylate, trimethylolpropanetri(meth)acrylate, glycerintri(meth)acrylate, glycerinacrylatemethacrylate, ethyleneoxide denatured trimethylolpropanetri(mata)acrylate, pentaerythritolhexa(meth)acrylate, triallylcyanurate, triallylisocyanurate, triallylphosphate, triallylamine, poly(meth)allyloxyalkane, (poly)ethyleneglycoldiglycidylether, glyceroldiglycidylether, ethylenglycol, polyethylenglycol, propyleneglycol, glycerin, pentaerythritol, ethylendiamine, ethylencarbonate, propylencarbonate, polyethylenimine, glycidyl(meth)acrylate, and the like.

The cross-linking agent may be used alone, or may be used in combination of more than one kind, according to needs. Moreover, the cross-linking agent may be added to a reaction system at once, or may be added in divided doses. The cross-linking agent is used in an amount preferably within a range of 0.005 mol% to 2 mol%, more preferably within a range of 0.01 mol% to 1 mol %, particularly preferably within a range of 0.03 mol% to 0.5 mol %, and most preferably within a range of 0.06 mol% to 0.3 mol%, with respect to the water-soluble ethylenically unsaturated monomer. If the cross-linking agent is used in an amount less than 0.005 mol%, or in an amount more than 2 mol%, there is a possibility that a water-absorbing agent having a desired water-absorbing property cannot be obtained.

(Initiator)

In the present embodiment, the aqueous solution is polymerized by using a photo polymerization initiator. However, in addition to the photo polymerization initiator, another polymerization initiator may be added, so as to accelerate polymerization.

The another polymerization initiator is, for example, a thermal radical polymerization initiator such as potassium persulfate, ammonium persulfate, sodium persulfate, t-butylhydroperoxide, hydrogen peroxide, 2,2'-azobis(2-amidinopropane)dihydrochloride, and the like. Note that 2,2'-azobis(2-amidinopropane)dihydrochloride can also function as a photo polymerization initiator. Furthermore, a redox-type initiator including (i) the radical polymerization initiator and (ii) a reducing agent that accelerates decomposition of the radical polymerization initiator may be used. Examples of the reducing agent are (i) (bi)sulfurous acid (salt) such as sodium sulfite, sodium hydrogen sulfite, and the like; (ii) L-ascorbic acid (salt); (iii) reducing metal (salt) such as ferrous salt and the like; (iv) amines; (v) and the like.

The polymerization initiator is used in an amount approximately 0.001 mol% to 2 mol%, preferably 0.0 mol% to 0.1 mol%, with respect to the water-soluble ethylenically unsaturated monomer. If the polymerization initiator is used in an amount less than 0.001 mol%, there is a possibility that a large amount of the monomer is left unreacted, i.e. a large amount of the monomer remains in the water-absorbing resin obtained. On the other hand, if the polymerization initiator is used in an amount more than 2 mol%, there is a possibility that the water-absorbing resin obtained includes an excessively large amount of water-soluble component.

The another polymerization initiator may be added, for example, in preparing the aqueous solution including the water-soluble ethylenically unsaturated monomer, or when the viscosity of the aqueous solution reaches a certain level after polymerization is initiated by using the photo polymerization initiator.

(Water-absorbing Resin)

By polymerizing the aqueous solution including the water-soluble ethylenically unsaturated monomer, water-absorbing resin (water-absorbing shaped body) is obtained. The water-absorbing resin absorbs a large amount of water, i.e. water in an amount 50 times to 1000 times more than the water-absorbing resin, under no applied pressure in ion exchanged water. In this way, the water-absorbing resin becomes hydrogel. It is more preferable that the water-absorbing resin includes a carboxyl group. Water-absorbing resin that includes a carboxyl group can be obtained, for example, by polymerizing and cross-linking a water-soluble ethylenically unsaturated monomer that includes (neutralized) acrylic acid (salt) as a main component. A non-cross-linked water-soluble component in the water-absorbing resin is preferably 25% by mass or less, more preferably 15% by mass or less, and particularly preferably 10% by mass or less. In case the water-soluble ethylenically unsaturated monomer that includes (neutralized) acrylic acid (salt) is polymerized, example of the acrylic acid salt are alkali metallic salt (e.g. Li salt, Na salt, and K salt), ammonium salt, amine salt, and the like of acrylic acid. The water-absorbing resin includes, as component(s) thereof, preferably 10 mol% to 100 mol% of acrylic acid and 90 mol% to 0 mol% of acrylic acid salt, where a sum of the acrylic acid and the acrylic acid salt is 100%, more preferably 20 mol% to 100 mol% of acrylic acid and 80 mol% to 0 mol% of acrylic acid salt, and particularly preferably 25 mol% to 60 mol% of acrylic acid and 75 mol% to 40 mol% of acrylic acid salt. In case the water-absorbing resin is obtained by polymerizing the water-soluble ethylenically unsaturated monomer that includes acrylic acid (salt) as a main component, a monomer other than acrylic acid (salt) may be included in addition to the acrylic acid (salt), according to needs. (Method of Manufacturing Water-absorbing Shaped Body)

In the present embodiment, the aqueous solution including the photo polymerization initiator and the water-soluble ethylenically unsaturated monomer is polymerized by radiating light intermittently onto the aqueous solution. More specifically, a method employed in the present embodiment is a method of manufacturing a water-absorbing shaped body, in which a water-soluble ethylenically unsaturated monomer including a photo polymerization initiator is polymerized, the method including the steps of: radiating light onto an aqueous solution including the photo polymerization initiator and the water-soluble ethylenically unsaturated monomer, so as to polymerize a part of the monomer to obtain a thickened aqueous solution (a first polymerization step); stopping radiation of the light, and shaping the thickened aqueous solution into a desired shape (a shaping step); and radiating light onto the thickened aqueous solution which has been shaped, so that a rest of the water-soluble ethylenically unsaturated monomer is polymerized (a second polymerization step). That is, the water-absorbing shaped body of the present invention is obtained as follows: (i) Water-absorbing resin is obtained by photo polymerization, which is performed for thickening the aqueous solution; (ii) While radiation of the light is temporarily stopped during the photo polymerization, the thickened aqueous solution is shaped into a desired shape; (iii) Thereafter, the thickened aqueous solution is further polymerized. The following specifically describes the manufacturing method.

The water-absorbing shaped body of the present invention is not particularly limited, as long as it has a certain shape. The monomer aqueous solution is shaped in the process of polymerization. Examples of "a certain shape" are a sheet shape, a film shape, a string shape, a fiber shape, a cubic shape, a spherical shape, and the like. The water-absorbing shaped body of the present invention is a water-containing polymer (a water-containing gel) or its dried product (a shaped dried product) that is obtained after the monomer aqueous solution is shaped into a certain shape. Water-absorbing resin powder obtained from a dried crushed product of a generally manufactured polymerized gel has no determinate shape, and does not include water-absorbing resin having a certain shape (or a water-absorbing shaped body obtained by shaping, processing, etc. the water-absorbing resin powder).

First, light is radiated onto the aqueous solution including the photo polymerization initiator and the water-soluble ethylenically unsaturated monomer, thereby partially polymerizing the aqueous solution (the first polymerization step).

The light radiated has such a wavelength as to decompose the photo polymerization initiator. Light including ultraviolet rays, visible rays and the like is suitably used as the light radiated. The wavelength of the light radiated is preferably 200nm or more, and more preferably 300nm or more. The light that includes, in a larger ratio, a light component whose wavelength is 300nm to 400nm is suitably used as the light radiated. Especially, in view of light transmittance, and deterioration of the polymer produced (the water-absorbing resin), it is suitable that the light radiated is such light whose main component has a wavelength greater than absorption wavelengths of the monomer used (the monomer component including the water-soluble ethylenically unsaturated monomer) and its polymer (the water-absorbing resin).

A light source for radiating the light may be a commercially available lamp. Examples of the light source are a mercury lamp, a metal halide lamp, a xenon lamp, a tungsten lamp, a fluorescent lamp, and the like.

Illuminance and radiation time of the light used are not particularly limited, as long as the aqueous solution including the monomer is thickened by being partially polymerized until the viscosity of the monomer becomes suitable for shaping. Usually, the illuminance is preferably within a range of 0.0001mW/cm$^2$ to 100mW/cm$^2$, and more preferably within a range of 0.001mW/cm$^2$ to 50mW/cm$^2$. Preferably, the radiation time is approximately 0.1 second to 30 minutes. While the light is radiated, the illuminance may be fixed, or may be changed. Moreover, the light may be radiated intermittently. For example, in case a thermal polymerization agent is included, intermittent radiation is suitably employed, so that it is possible to easily perform, in particular, adjustment of the polymerization, i.e. control of a temperature of the monomer aqueous solution to be thickened, the control being performed by adjusting an amount of heat release caused by the polymerization.

In the first polymerization step, the monomer component including the water-soluble ethylenically unsaturated monomer is polymerized until a desired viscosity is attained. The desired viscosity is such a viscosity that makes it possible to suitably shape the aqueous solution of the thickened monomer (the water-soluble ethylenically unsaturated monomer which includes a polymer as a part thereof) obtained by the partial polymerization.

If the viscosity of the thickened monomer obtained by the partial polymerization is suitable for shaping the thickened monomer into a desired shape, there is no particular problem. Usually, the viscosity of the thickened monomer is preferably 10mPa·s or more and 20,000,000mPa·s or less, more preferably 50mPa·s or more and 10,000,000mPa·s or less, and particularly preferably 100mPa·s or more and 1,000,000mPa·s or less. The viscosity of less than 10mPa·s is not preferable, because the thickened monomer is easily deshaped by its own weight and/or by a weak external force, except a case in which the thickened monomer is shaped by casting. If the viscosity is more than 20,000,000mPa·s, the viscosity is so high that the thickened monomer cannot be shaped easily.

In order to prevent bumping and the like, and in light of performance, a reaction temperature in the polymerization reaction is preferably -5°C or more and 150°C or less, and more preferably 20°C or more and 120°C or less. Moreover, a reaction time may be set appropriately in accordance with (i) types of and amounts of the monomer and the polymerization initiator, (ii) the reaction temperature, (iii) and the like, with no particular limitation.

Next, the thickened monomer having the viscosity that falls within the foregoing ranges is shaped into a desired shape (the shaping step). In performing the shaping step, the radiation of the light is stopped temporarily. Note that the radiation of the light may be restarted while the shaping step is performed.

In the shaping step, for example, the water-absorbing shaped body can be obtained in a string shape by pushing the thickened monomer out of a nozzle. Moreover, for example, the water-absorbing shaped body can be obtained in a sheet shape or a film shape by injecting the thickened monomer onto a continuous belt.

It is preferable that, in the shaping step, the thickened monomer is shaped so that the finally obtained water-absorbing shaped body has at least one shape selected from the group consisting of a string shape, a fiber shape, a foam shape, a sheet shape, a film shape, a cubic shape, and a spherical shape.

Then, the polymerization is completed by radiating light again onto the thickened monomer that has been shaped or that is being shaped, thereby obtaining the water-absorbing shaped body of the present invention (the second polymerization step).

In accordance with intended uses, the thickened monomer may be shaped into various shapes. For example, if the thickened monomer is polymerized while being ejected from a plurality of nozzles or the like (string-producing polymerization), a polymerized gel (a water-absorbing shaped body) that is several tens of micrometers to several hundreds of micrometers in diameter and that has a fiber shape or a string shape is obtained. Alternatively, if the thickened monomer is polymerized while being dropped through a plurality of nozzles or the like, a polymerized gel that is several tens of micrometers to several hundreds of micrometers in diameter and that has a spherical shape is obtained. These processes may be performed in a liquid phase or in a vapor phase. Moreover, these processes may be performed on a metal plate, a resin plate, and a conveying belt. In order to obtain a spherical gel having a particularly large diameter, it is advantageous to perform the processes in an organic solvent.

Moreover, for example, by polymerizing the thickened monomer while the thickened monomer is shaped on a fiber base material such as a nonwoven fabric, or after the thickened monomer has been shaped, it is possible to obtain a water-absorbing compound material in which the water-absorbing resin and the nonwoven fabric are combined. The water-absorbing shaped body obtained or the water-absorbing compound including the water-absorbing shaped body may be used in a form of a water-containing polymer (water-absorbing gel), or may be dried until a desired moisture content is attained, and used as a dried and shaped body. The water-absorbing shaped body obtained or the water-absorbing compound including the water-absorbing shaped body may be dried and crushed, and used as water-absorbing resin powder (powder having no determinate shape).

Moreover, if a thermal radical polymerization initiator is mixed in the aqueous solution including the water-soluble ethylenically unsaturated monomer, or if a polymerization initiator is added to the thickened monomer, heat may be applied in the second polymerization step, so as to accelerate the polymerization. Furthermore, in order to complete the polymerization reaction, heat may be applied after the polymerization reaction is furthered by radiating light in the second polymerization step.

It is more preferable that, in the method of the present invention for manufacturing the water-absorbing shaped body, the aqueous solution includes a cross-linking agent. The cross-linking agent may be added to the aqueous solution before the first polymerization step or after the second polymerization step. However, it is preferable that the cross-linking agent may be added to the aqueous solution before the first polymerization step. In this case, in the aqueous solution, the photo polymerization initiator, the water-soluble ethylenically unsaturated monomer, and the cross-linking agent are mixed in advance. Therefore, a thickened monomer and a water-absorbing shaped body can be manufactured directly by simply radiating light intermittently. Moreover, because the cross-linking agent is added to the aqueous solution before the first polymerization step, it is possible to disperse the cross-linking agent more evenly, as compared with a case in which the cross-linking agent is added to the thickened monomer.

Moreover, if the cross-linking agent is added to the aqueous solution before the first polymerization step, it is possible to perform the shaping step right after the first polymerization step. That is, because the cross-linking agent is added to the aqueous solution in advance, the thickened monomer obtained by performing the first polymerization step also contains the cross-linking agent. Therefore, it is not necessary to add a cross-linking agent to the thickened monomer. Thus, it is possible to shape the thickened monomer right after the aqueous solution is thickened.

If a cross-linking agent is added to the aqueous solution after the first polymerization step, the shaping step is performed after the cross-linking agent is added to the thickened monomer. Therefore, the shaping step cannot be performed right after the first polymerization step.

In order to perform the shaping step right after the first polymerization step, the aqueous solution is continuously injected into an apparatus for performing the first polymerization step and the shaping step. The apparatus is not particularly limited, as long as the apparatus is capable of performing the first polymerization step and the shaping step. For example, the apparatus may be a continuous belt, a cylindrical-shape apparatus, or the like. A continuous belt is a rotatable endless belt. When a continuous belt is used, the aqueous solution is continuously injected onto the continuous belt, so that the aqueous solution is thickened and shaped while being conveyed. In this case, in order prevent the aqueous solution from spilling out of the continuous belt, it is preferable that the first polymerization, step is performed simultaneously while the aqueous solution is injected. If a cylindrical-shape apparatus is used, the aqueous solution is continuously injected into the apparatus, so that the aqueous solution is thickened and shaped.

By performing the second polymerization step after the shaping step, the water-absorbing shaped body of the present invention is obtained. The second polymerization step can be performed right after the shaping step. Therefore, if a cross-linking agent is added to the aqueous solution in advance, it is possible to continuously perform the first polymerization step, the shaping step, and the second polymerization step.

As described above, the method of the present embodiment for manufacturing the water-absorbing shaped body is a method in which polymerization is caused by radiating light intermittently. More specifically, the method is a method of manufacturing a water-absorbing shaped body by polymerizing an aqueous solution including a photo polymerization initiator and a water-soluble ethylenically unsaturated monomer, wherein radiation of the light is temporarily stopped during polymerization, and a thickened monomer is shaped.

In other words, in this method, the polymerization is temporarily stopped and shaping is performed when the aqueous solution including the water-soluble ethylenically unsaturated monomer is thickened by radiating light onto the aqueous solution until a viscosity necessary for shaping is attained. Unlike the conventional arrangement, with this arrangement it is no longer necessary to use a thickening agent in order to shape the aqueous solution including the water-soluble ethylenically unsaturated monomer.

Moreover, because light is used for the polymerization, it is easy to control the polymerization. That is, because the photo polymerization initiator is used for the polymerization, it is possible to temporarily stop the polymerization by stopping radiation of the light. Therefore, a thickened monomer having a viscosity suitable for shaping can be produced easily, by radiating light intermittently onto the aqueous solution including the water-soluble ethylenically unsaturated monomer.

The wavelength of the light radiated may be different in the first polymerization step and in the second polymerization step. In the first polymerization step, light having a relatively long wavelength, i.e. low-energy light, may be radiated, because the polymerization in the first polymerization step is for thickening the aqueous solution. On the other hand, because the polymerization needs to be completed in the second polymerization step, light having a relatively short wavelength, i.e. high-energy light, is radiated in the second polymerization step. By thus radiating light of different wavelengths in the first polymerization step and in the second polymerization step, it is possible to more easily produce a thickened monomer having a suitable viscosity.

Moreover, the method of the present embodiment for manufacturing the water-absorbing shaped body may be a method including the steps of: radiating light onto an aqueous solution including a photo polymerization initiator and a water-soluble ethylenically unsaturated polymer; stopping radiation of the light when a desired viscosity of the aqueous solution is attained; shaping the aqueous solution into a desired shape; and radiating light again onto the aqueous solution, so as to complete polymerization.

It is preferable that, in the method of the present invention for manufacturing the water-absorbing shaped body, the aqueous solution is polymerized on a surface of another base material or inside another base material. It is preferable that the aqueous solution before the light is radiated includes a cross-linking agent in advance.

Moreover, it is preferable that, in the method of the present invention for manufacturing the water-absorbing shaped body, the aqueous solution further includes a radical polymerization initiator other than the photo polymerization initiator. It is preferable that polymerization is furthered by applying heat after the light is radiated. Furthermore, it is preferable that, in the method of the present invention for manufacturing the water-absorbing shaped body, the second polymerization step is performed on the aqueous solution which is being shaped and which includes a polymer as a part thereof.

Moreover, it is preferable that, in the method of the present invention for manufacturing the water-absorbing shaped body, the shaping step is performed on a fiber base material or inside a fiber base material. It is preferable to perform the second polymerization step right after the shaping step. It is preferable that the first polymerization step and the second polymerization step are performed on a continuous belt.

Moreover, it is preferable that, in the method of the present invention for manufacturing the water-absorbing shaped body, the aqueous solution is shaped into at least one shape selected from the group consisting of a string shape, a fiber shape, a foam shape, a sheet shape, a film shape, a cubic shape, and a spherical shape.

The water-absorbing shaped body of the present invention is shaped through the polymerization process. Therefore, unlike conventional methods, it is not necessary to perform a complex shaping step for shaping water-absorbing resin powder. The water-absorbing shaped body of the present invention is less-expensive and easy to manufacture. Moreover, the water-absorbing shaped body of the present invention has such excellent properties that various liquids can be absorbed, such as water, body fluids, physiological saline, urine, blood, cement water, fertilizer-containing water, and the like. Therefore, the water-absorbing shaped body of the present invention may be used as an absorbing product for absorbing these liquids. The absorbing product is useful for various industrial uses that require a water-absorbing property, a water-retaining property, a swelling property, and a gelatinous property. Examples of such industrial uses are disposable diapers, sanitary napkins, incontinence pads, and the like, which directly touch human body; separating material for separating water in oil; other dehydrating or drying agent; water-retaining material for plants, soil, and the like; coagulating agent for sludge; anti dew condensation agent; waterproof agent for electric wires or optical fibers; waterproof material for civil engineering and construction; and the like. For example, the absorbing product has a structure in which an absorbing layer including the water-absorbing shaped body of the present invention or its dried and crushed product is sandwiched between a liquid-permeable sheet and a liquid-impermeable sheet.

[Examples]

The following examples and comparative examples more specifically describe the present invention. However, the present invention is not limited to the examples and comparative examples. The finally obtained water-absorbing shaped body is evaluated in terms of an absorption ratio under no applied pressure, an amount of soluble component, and an amount of solid component. Each evaluation method is described below.

[Absorption Ratio under No Applied Pressure]

The absorption ratio under no applied pressure was evaluated by the following method.

First, in case of water-absorbing resin powder, approximately 0.2g was measured, and in case of a water-containing polymer (water-containing polymer gel) before drying, approximately 0.4g was measured (precisely to three places of decimals). Then, the water-absorbing resin powder or the water-containing polymer was evenly filled into a bag made of a nonwoven fabric (60mm × 60mm). Then, the bag was soaked in a 0.9%-by-mass aqueous solution of sodium chloride (physiological saline). The bag was withdrawn 30 minutes later in case of the water-absorbing resin powder, and 16 hours later in case of the water-containing polymer before drying. By using a centrifugal separator, the bag was drained for three minutes at $250 \times 9.81 \text{m/s}^2$ (250G), and a weight W1(g) of the bag was measured. Next, the same operation was performed without the water-absorbing resin, and a weight W0(g) was measured. Then, from the weights W0 and W1, an absorption ratio (GV) under no load was calculated.

$$GV(g/g) = [(W1-W0)/\text{weight of the water-absorbing resin}]-1 \ldots (1).$$

[Measurement of Amount of Soluble Component]

184.3g of a 0.9%-by-mass aqueous solution of sodium chloride (physiological saline) was poured into a 250ml plastic container with a cover. Then, 1.00g of the water-absorbing resin was added to the aqueous solution. Thereafter, the aqueous solution was stirred for 16 hours, and a soluble component in the resin was extracted. The liquid thus extracted was filtered by a filter paper, so as to obtain a filtrate. 50.0g of the filtrate was measured, and used as a solution to be measured. Then, the physiological saline was titrated by using a 0.1N NaOH aqueous solution until pH of the physiological saline reached 10. After that, the physiological saline was titrated by using a 0.1N HCl aqueous solution until the pH of the physiological saline reached 2.7. Here, an amount of the NaOH aqueous solution used for the titration is expressed as [bNaOH]ml, and an amount of the HCl aqueous solution used for the titration is expressed as [bHCL] ml. Next, the solution to be measured was titrated in the same way. Here, an amount of an NaOH aqueous solution used for the titration is expressed as [NaOH]ml, and an amount of an HCl aqueous solution used for the titration is expressed as [HCL]ml. From a weight-average molecular weight (Mw) of the water-absorbing resin used for the measurement, and the amounts of the aqueous solutions used for the titration, an amount of soluble component of the water-absorbing resin was calculated.

$$\text{Amount of soluble component (\% by mass)}$$

$$= 0.1 \times Mw \times 184.3 \times 100 \times ([HCl] - [bHCl]) / 1000 / 1.0 / 50.0 \ldots (2),$$

where

$$Mw = 72.06 \times (1\text{-neutralization ratio} / 100) + 94.04 \times \text{neutralization ratio} / 100,$$

and

$$\text{neutralization ratio (mol\%)} = (1 - ([NaOH] - [bNaOH]) / ([HCl] - [bHCl])) \times 100.$$

Note that Formula (2) is a formula in case of water-absorbing resin including acrylic acid and sodium salt thereof. If different materials are used, different values are used in the formula.

[Solid Component]

In case of a water-containing polymer before drying: Approximately 2g of the polymer was placed in a petri dish, and dried for 16 hours in a drying machine at 180°C. From a loss on drying, an amount of a solid component of the water-containing polymer was calculated.

In case of a water-containing polymer after drying: Approximately 1g of the polymer was placed in a petri dish, and dried for 3 hours in a drying machine at 180°C. From a loss on drying, an amount of the solid component of the water-containing polymer was calculated.

The amount of the solid component was calculated according to ((weight after drying) / (weight before drying)) $\times$ 100.

[Example 1]

A monomer aqueous solution to be polymerized was prepared by mixing 431g of a 37%-by-mass aqueous solution of sodium acrylate, 40.7g of acrylic acid, 0.22g of polyethyleneglycoldiacrylate (n=8), 0.20g of 2-hydroxy-2-methylpropiophenone, and 28.3g of purified water. The monomer aqueous solution was deaerated for 30 minutes at a room temperature in a nitrogen airflow. Then, the monomer aqueous solution was poured into a glass injector. At a tip of the glass injector, a nozzle of approximately 1.0mm in diameter was provided. By using black light fluorescent lamps (FL6BLB, product of Toshiba Light & Technology Corporation), ultraviolet rays were radiated onto the glass injector. Intensity of the ultraviolet rays was approximately 1mW/cm$^2$ (dominant wavelength: 352nm). When a part of the monomer aqueous solution in the glass injector was polymerized, so that the monomer aqueous solution was thickened, radiation of the ultraviolet rays was stopped temporarily. Subsequently, the monomer aqueous solution (thickened monomer) thickened by partial polymerization was pushed out of a tip of the nozzle. While the monomer aqueous solution was falling down, ultraviolet rays were radiated from around the monomer aqueous solution, by using black light mercury lamps (H400BL, product of Toshiba Light & Technology Corporation). At this time, intensity of the ultraviolet rays was approximately 30mW/cm$^2$ (dominant wavelength: 352nm). In this way, a water-absorbing shaped body 1 that had flexibility and that was in a string shape (diameter: approximately 0.8mm) was obtained. By using scissors, approximately 1mm-length of the water-absorbing shaped body 1 was cut off, and properties of the cut-off part were measured. An absorption ratio under no applied pressure of the water-absorbing shaped body 1 was 17.7g/g, a soluble component of the water-absorbing shaped body 1 was 1.2% by mass, and a solid component of the water-absorbing shaped body 1 was 44.0% by mass. If the solid component is set as 100%, the absorption ratio under no applied pressure was 40.3g/g, and the soluble component was 2.7% by mass. Then, the water-absorbing shaped body 1 in the string shape was dried for ten minutes at 170°C in a hot air dryer, and was ground in a tabletop grinding machine, so as to obtain powder. Subsequently, the power was classified by using a sieving net having an aperture of 600μm, and a sieving net having an aperture of 300μm. In this way, a water-absorbing resin powder 2 was obtained. Most particles of the water-absorbing resin powder 2 were 600μm to 300μm in diameter. An absorption ratio under no applied pressure of the water-absorbing resin powder 2 was 36.2g/g, a soluble component of the water-absorbing resin powder 2 was 7.5% by mass, and a solid component of the water-absorbing resin powder 2 was 90.5% by mass.

[Example 2]

In a conical beaker, 431g of a 37%-by-mass aqueous solution of sodium acrylate, 40.7g of acrylic acid, 0.20g of 2-hydroxy-2-methylpropiophenone, and 28.3g of purified water were mixed, thereby obtaining a monomer aqueous solution to be polymerized. The monomer aqueous solution was deaerated for 30 minutes at a room temperature in a nitrogen airflow. Then, under the same condition as in Example 1, ultraviolet rays were radiated from above the glass beaker by using black light fluorescent lamps (FL6BLB, product of Toshiba Light & Technology Corporation). When a part of the monomer aqueous solution was polymerized, so that the monomer aqueous solution was thickened, radiation of the ultraviolet rays was stopped temporarily. By using a Brookfield viscosity meter, a viscosity of the monomer aqueous solution was measured. The viscosity of the monomer aqueous solution was approximately 2000mPa·s. Next, as a cross-linking agent, 0.22g of polyethyleneglycoldiacrylate (n=8) was added to the aqueous solution (thickened monomer aqueous solution) thickened by partial polymerization, and was dissolved with stirring. A part of the thickened monomer aqueous solution was poured into a glass injector. At a tip of the glass injector, a nozzle of approximately 1.0mm in diameter was provided. Then, the monomer aqueous solution in the glass injector was pushed out of a tip of the nozzle at a room temperature. At this time, ultraviolet rays were radiated by using black light mercury lamps (H400BL, product of Toshiba Light & Technology Corporation), under the same condition as in Example 1, from around the monomer aqueous solution falling down from the tip of the nozzle. In this way, a water-absorbing shaped body 3 that had flexibility and that was in a string shape (diameter: approximately 0.8mm) was obtained. By using scissors, approximately 1 mm-length of the water-absorbing shaped body 3 was cut off, and properties of the cut-off part were measured. An absorption ratio under no applied pressure of the water-absorbing shaped body 3 was 19.5g/g, a soluble component of the water-absorbing shaped body 3 was 1.6% by mass, and a solid component of the water-absorbing shaped body 3 was 43.4% by mass. If the solid component is set as 100%, the absorption ratio under no applied pressure was 45.0g/g, and the soluble component was 3.8% by mass. Then, the water-absorbing shaped body 3 in the string shape was dried for ten minutes at 170°C in a hot air dryer, and was ground in a tabletop grinding machine, so as to obtain powder. Subsequently, the power was classified by using a sieving net having an aperture of 600μm, and a sieving net having an aperture of 300μm. In this way, a water-absorbing resin powder 4 was obtained. Most particles of the water-absorbing resin powder 4 were 600μm to 300μm in diameter. An absorption ratio under no applied pressure of the water-absorbing resin powder 4 was 37.6g/g, a soluble component of the water-absorbing resin powder 4 was 6.9% by mass, and a solid component of the water-absorbing resin powder 4 was 90.1% by mass.

[Example 3]

As in Example 2, a thickened monomer aqueous solution containing a dissolved cross-linking agent was prepared. Then, the thickened monomer aqueous solution was intermittently pushed out of a glass injector onto a moving belt. In this way, the thickened monomer aqueous solution was shaped into a droplet shape. From above the belt, ultraviolet rays were radiated by using black light mercury lamps (H400BL, product of Toshiba Light & Technology Corporation), under the same condition as in Example 1. As a result, a polymer gel (water-absorbing shaped body) having a pellet shape was obtained.

[Example 4]

As in example 2, a thickened monomer aqueous solution containing a dissolved cross-linking agent was prepared. Then, the thickened monomer aqueous solution was dropped from an injector into a glass column containing liquid paraffin. At this time, ultraviolet rays were radiated from outside by using black light mercury lamps (H400BL, product of Toshiba Light & Technology Corporation), under the same condition as in Example 1. The monomer solution was shaped into a spherical shape in the paraffin, and was gradually precipitated while being polymerized. From a bottom of the column, a polymer gel that had a uniform particle diameter and that had an excellently spherical shape with no inter-gel adhesion and agglomeration was obtained.

[Example 5]

As in example 2, a thickened monomer aqueous solution containing a dissolved cross-linking agent was prepared. Then, the thickened monomer aqueous solution was continually dropped from an injector onto a fiber base material (nonwoven fabric), so that the thickened monomer aqueous solution was shaped into a string shape and was layered irregularly. At this time, ultraviolet rays were radiated by using black light mercury lamps (H400BL, product of Toshiba Light & Technology Corporation), under the same condition as in Example 1, from around the thickened monomer aqueous solution falling down from a tip of the nozzle. In this way, the thickened monomer aqueous solution was further polymerized, and a compound material was obtained. The compound material was then dried at 80°C until a moisture content of a layered string-shaped polymer (water-absorbing shaped body) became 20%. As a result, a water-absorbing compound material having flexibility was obtained. The flexibility was lost when the compound material was dried until the moisture content became less than 10%, although it depended on a diameter of the nozzle through which the thickcncd monomer aqueous solution was pushed out.

[Example 6]

A monomer aqueous solution to be polymerized was prepared by mixing 431g of a 37%-by-mass aqueous solution of sodium acrylate, 40.7g of acrylic acid, 0.32g of polyethyleneglycoldiacrylate (n=8), 0.20g of 2-hydroxy-2-methylpropiophenone, and 28.3g of purified water. The monomer aqueous solution was deaerated at 20°C until dissolved oxygen in an airflow of nitrogen was reduced to 1ppm or less. Then, by using a pump, the monomer aqueous solution was injected onto a conveying belt made of stainless steel, at a flow rate of 30kg/h. The conveying belt was $0.5m \times 3.5m$. right before pouring the monomer aqueous solution into the pump, a 3.0%-by-mass aqueous solution of sodium persulfate was added at a flow rate of 0.183kg/h, and mixed in the monomer aqueous solution.
Above the conveing belt, black light mercury lamps (H400BL, product of Toshiba Light & Technology Corporation) were respectively provided at positions of 0.3m, 1.5m, and 3.0m from an inlet toward a longitudinal direction (downstream direction) of the conveying belt. From the inlet to a 1m-position toward the longitudinal direction of the conveying belt, a bottom surface of the conveying belt was cooled with water of 20°C. Under this setting, simultaneously when the monomer aqueous solution was injected onto the conveying belt, ultraviolet rays (dominant wavelength: 352nm) were radiated onto the monomer aqueous solution. The ultraviolet rays radiated were approximately $3.9mW/cm^2$ in intensity. Because the monomer aqueous solution was thus thickened by polymerization, the monomer aqueous solution did not spill out in a lateral direction. When the monomer aqueous solution was thickened and lost fluidity, radiation of the ultraviolet rays were stopped temporarily. Meanwhile, the monomer aqueous solution was cooled. The thickened monomer aqueous solution was conveyed by the conveying belt, and again subjected to ultraviolet rays. Finally, a water-absorbing shaped body 5 that had flexibility and that was in a plate shape (thickness: approximately 2mm) was obtained from an outlet of the conveying belt. By using scissors, approximately 1mm-length of the water-absorbing shaped body 5 was cut off, and properties of the cut-off part were measured. An absorption ratio under no applied pressure of the water-absorbing shaped body 5 was 14.7g/g, a soluble component of the water-absorbing shaped body 5 was 1.8% by mass, and a solid component of the water-absorbing shaped body 5 was 42.3% by mass. If the solid component is set as 100%, the absorption ratio under no applied pressure was 34.8g/g, and the soluble component was 4.3% by mass. Then, the water-absorbing shaped body 5 in the plate shape was dried for ten minutes at 170°C in a hot air dryer, and was ground in a tabletop grinding machine, so as to obtain powder. Subsequently, the power was classified by using a sieving net having an aperture of 600μm, and a sieving net having an aperture of 300μm. In this way, water-absorbing resin powder 6 was obtained. Most particles of the water-absorbing resin powder 6 were 600μm to 300μm in diameter. An absorption ratio under no applied pressure of the water-absorbing resin powder 4 was 31.6g/g, a soluble component of the water-absorbing resin powder 6 was 6.1% by mass, and a solid component of the water-absorbing resin powder 6 was 89.5% by mass.

[Comparative Example 1]

In a conical beaker, 431g of a 37%-by-mass aqueous solution of sodium acrylate, 40.7g of acrylic acid, 0.20g of 2-hydroxy-2-methylpropiophenone, and 28.3g of purified water were mixed, thereby obtaining a monomer aqueous solution to be polymerized. In the solution, hydroxyethylcellulose (approximately 1.8% by mass with respect to a solid component of the monomer) was dissolved as a thickening agent, so that a viscosity of the solution measured by using a Brookfield viscosity meter was approximately 2000mPa·s. It took a long time to completely dissolve the thickening agent. Subsequently, 0.22g of polyethyleneglycoldiacrylate (n=8) was added to the aqueous solution thickened by hydroxyethylcellulose, and was dissolved with stirring. A part of the monomer aqueous solution was poured into a glass injector. At a tip of the glass injector, a nozzle of approximately 1.0mm in diameter was provided. Then, the monomer aqueous solution in the glass injector was pushed out of a tip of the nozzle at a room temperature. At this time, ultraviolet rays were radiated by using black light mercury lamps (H400BL, product of Toshiba Light & Technology Corporation), from around the monomer aqueous solution falling down from the tip of the nozzle. In this way, a comparison-use water-absorbing shaped body 1 that had flexibility and that was in a string shape (diameter: approximately 0.8mm) was obtained. By using scissors, approximately 1mm-length of the comparison-use water-absorbing shaped body 1 was cut off, and properties of the cut-off part were measured. An absorption ratio under no applied pressure of the comparison-use water-absorbing shaped body 1 was 18.0g/g, a soluble component of the comparison-use water-absorbing shaped body 1 was 2.0% by mass, and a solid component of the comparison-use water-absorbing shaped body 1 was 44.1% by mass. If the solid component is set as 100%, the absorption ratio under no applied pressure was 40.8g/g, and the soluble component was 4.5% by mass. Then, the comparison-use water-absorbing shaped body 1 in the string shape was dried for ten minutes at 170°C in a hot air dryer, and was ground in a tabletop grinding machine, so as to obtain powder. Subsequently, the power was classified by using a sieving net having an aperture of 600μm, and a sieving net having an aperture of 300μm. In this way, comparison-use water-absorbing resin powder 2 was obtained. Most particles of the comparison-use water-absorbing resin powder 2 were 600μm to 300μm in diameter. An absorption ratio under no applied pressure of the comparison-use water-absorbing resin powder 2 was 35.2g/g, a soluble component of the comparison-use water-absorbing resin powder 2 was 9.3% by mass, and a solid component of the comparison-use water-absorbing resin powder 2 was 90.4% by mass.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

A method of manufacturing a water-absorbing shaped body that is produced easily without using a thickening agent. Light is radiated onto an aqueous solution including a photo polymerization initiator and a water-soluble ethylenically unsaturated monomer. When a desired viscosity is attained, radiation of the light is stopped temporarily. Then, the aqueous solution, which is thickened, is shaped into a desired shape. Thereafter, polymerisation is completed by radiating light again.

**Claims**

1. A method of manufacturing a water-absorbing shaped body, **characterized by** comprising the step of:

   polymerizing an aqueous solution including a photo polymerization initiator and a water-soluble ethylenically unsaturated monomer by radiating light intermittently onto the aqueous solution.

2. The method as set forth in claim 1, wherein:

   the aqueous solution is polymerized on a surface of another base material or inside another base material.

3. A method of manufacturing a water-absorbing shaped body by polymerizing an aqueous solution including a photo polymerization initiator and a water-soluble ethylenically unsaturated monomer, the method being **characterized by** comprising the step of:

   radiating light onto the aqueous solution, so as to polymerize a part of the water-soluble ethylenically unsaturated monomer (a first polymerization step);
   stopping radiation of the light, and shaping the aqueous solution, which includes a polymer as a part thereof (a shaping step); and
   radiating light onto the aqueous solution, so that a rest of the water-soluble ethylenically unsaturated monomer is polymerized, the aqueous solution having been shaped and including the polymer as a part thereof (a second polymerization step).

4. The method as set forth in claim 1 or claim 3, wherein:

   the aqueous solution before the light is radiated includes a cross-linking agent in advance.

5. The method as set forth in claim 1 or claim 3, wherein:

   the aqueous solution further includes a radical polymerization initiator other than the photo polymerization initiator.

6. The method as set forth in claim 1 or claim 3, wherein:

   polymerization is furthered by applying heat after the light is radiated.

7. The method as set forth in claim 3, wherein:

   the second polymerization step is performed on the aqueous solution which is being shaped and which includes the polymer as a part thereof.

8. The method as set forth in claim 3, wherein:

   the shaping step is performed on a fiber base material or inside a fiber base material.

9. The method as set forth in claim 3, wherein:

   the shaping step is performed right after the first polymerization step.

10. The method as set forth in claim 3, wherein:

    the first polymerisation step and the shaping step are performed on a continuous belt.

11. The method as set forth in any one of claims 1 to 10, wherein:

    the aqueous solution is shaped into at least one shape selected from the group consisting of a string shape, a fiber shape, a foam shape, a sheet shape, a film shape, a cubic shape, and a spherical shape.


**Patentansprüche**

1. Verfahren zur Herstellung eines wasserabsorbierenden Formkörpers, **gekennzeichnet durch** Umfassen des Schrittes:

   Polymerisieren einer wässrigen Lösung, die einen Photopolymerisationsinitiator und ein wasserlösliches ethylenisches ungesättigtes Monomer enthält, **durch** intermittierendes Bestrahlen der wässrigen Lösung mit Licht.

2. Verfahren nach Anspruch 1, wobei:

   die wässrige Lösung an einer Oberfläche eines anderen Grundmaterials, oder innerhalb eines anderen Grundmaterials polymerisiert wird.

3. Verfahren zur Herstellung eines wasserabsorbierenden Formkörpers durch Polymerisieren einer wässrigen Lösung, die einen Photopolymerisationsinitiator und ein wasserlösliches ethylenisches ungesättigtes Monomer enthält, wobei das Verfahren **gekennzeichnet ist, durch** Umfassen des Schrittes:

   Bestrahlen der wässrigen Lösung mit Licht, um einen Teil des wasserlöslichen ethylenischen ungesättigten Monomers zu polymerisieren (ein erster Polymerisationsschritt);
   Unterbrechen der Bestrahlung mit dem Licht, und Formen der wässrigen Lösung, die ein Polymer als ein Teil davon enthält (ein Formgebungsschritt); und

Bestrahlen der wässrigen Lösung mit Licht, so dass ein Rest des wasserlöslichen ethylenischen ungesättigten Monomers polymerisiert wird, die wässrige Lösung geformt wurde und das Polymer als ein Teil davon enthält (ein zweiter Polymerisationsschritt).

**4.** Verfahren nach Anspruch 1 oder 3, wobei:

die wässrige Lösung, vor der Bestrahlung mit dem Licht, vorab ein Vernetzungsmittel enthält.

**5.** Verfahren nach Anspruch 1 oder 3, wobei:

die wässrige Lösung des Weiteren einen vom Photopolymerisationsinitiator unterschiedlichen radikalischen Polymerisationsinitiator enthält.

**6.** Verfahren nach Anspruch 1 oder 3, wobei:

eine Polymerisation durch Erwärmen unterstützt wird, nachdem mit dem Licht bestrahlt wurde.

**7.** Verfahren nach Anspruch 3, wobei:

der zweite Polymerisationsschritt an der wässrigen Lösung durchgeführt wird, die geformt wird, und die das Polymer als ein Teil davon enthält.

**8.** Verfahren nach Anspruch 3, wobei:

der Formgebungschritt an einem Fasergrundmaterial oder innerhalb eines Fasergrundmaterials durchgeführt wird.

**9.** Verfahren nach Anspruch 3, wobei:

der Formgebungsschritt gleich nach dem ersten Polymerisationsschritt durchgeführt wird.

**10.** Verfahren nach Anspruch 3, wobei:

der erste Polymerisationsschritt und der Formgebungsschritt an einem fortlaufenden Band durchgeführt werden.

**11.** Verfahren nach einem der Ansprüche 1 bis 10, wobei:

die wässrige Lösung in mindestens eine Form, ausgewählt aus der Gruppe bestehend aus einer Strangform, einer Faserform, einer Schaumform, einer Blattform, einer Filmform, einer Würfelform und einer Kugelform, geformt wird.


## Revendications

**1.** Procédé de fabrication d'un corps moulé hydroabsorbant, **caractérisé en ce qu'**il comprend l'étape de :

polymérisation d'une solution aqueuse, comprenant un amorceur de photopolymérisation et un monomère insaturé de type éthylène soluble dans l'eau, par émission de lumière de façon intermittente sur la solution aqueuse.

**2.** Procédé tel que défini dans la revendication 1, dans lequel :

la solution aqueuse est polymérisée sur une surface d'un autre matériau de base ou à l'intérieur d'un autre matériau de base.

**3.** Procédé de fabrication d'un corps moulé hydroabsorbant par polymérisation d'une solution aqueuse comprenant un amorceur de photopolymérisation et un monomère insaturé de type éthylène soluble dans l'eau, le procédé étant **caractérisé en ce qu'**il comprend l'étape :

d'émission de lumière sur la solution aqueuse, de façon à polymériser une partie du monomère insaturé de type éthylène soluble dans l'eau (une première étape de polymérisation) ;

d'interruption de l'émission de lumière, et de moulage de la solution aqueuse, qui comprend un polymère en tant que partie de celle-ci (une étape de moulage) ; et

d'émission de lumière sur la solution aqueuse, de façon qu'un reste du monomère insaturé de type éthylène soluble dans l'eau soit polymérisé, la solution aqueuse ayant été moulée et comprenant le polymère en tant que partie de celle-ci (une seconde étape de polymérisation).

4. Procédé tel que défini dans la revendication 1 ou la revendication 3, dans lequel :

la solution aqueuse, avant que la lumière ne soit émise, comprend par avance un agent de réticulation.

5. Procédé tel que défini dans la revendication 1 ou la revendication 3, dans lequel :

la solution aqueuse comprend, en outre, un amorceur de polymérisation radicalaire autre que l'amorceur de photopolymérisation.

6. Procédé tel que défini dans la revendication 1 ou la revendication 3, dans lequel :

la polymérisation est poursuivie par application de chaleur après l'émission de lumière.

7. Procédé tel que défini dans la revendication 3, dans lequel :

la seconde étape de polymérisation est effectuée sur la solution aqueuse qui est en cours de moulage et qui comprend le polymère en tant que partie de celle-ci.

8. Procédé tel que défini dans la revendication 3, dans lequel :

l'étape de moulage en forme est effectuée sur un matériau de base fibreux ou à l'intérieur d'un matériau de base fibreux.

9. Procédé tel que défini dans la revendication 3, dans lequel :

l'étape de moulage est effectuée juste après la première étape de polymérisation.

10. Procédé tel que défini dans la revendication 3, dans lequel :

la première étape de polymérisation et l'étape de moulage sont effectuées sur une bande continue.

11. Procédé tel que défini dans l'une quelconque des revendications 1 à 10, dans lequel :

la solution aqueuse est moulée en au moins une forme choisie dans le groupe constitué par une forme de fil, une forme de fibre, une forme de mousse, une forme de feuille, une forme de film, une forme cubique, et une forme sphérique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3009574 B
- JP 9051912 A
- JP 10005583 A
- JP 10018125 A
- JP 62156102 A
- US 4857610 A
- US 4893999 A
- US 6022610 A